(19) **Europäisches Patentamt / European Patent Office / Office européen des brevets**

(11) **EP 1 924 658 B1**

(12) **EUROPEAN PATENT SPECIFICATION**

(45) Date of publication and mention
of the grant of the patent:
**25.08.2010 Bulletin 2010/34**

(51) Int Cl.:
***C09D 11/00*** *(2006.01)*

(21) Application number: **06824974.7**

(22) Date of filing: **15.09.2006**

(86) International application number:
**PCT/US2006/036073**

(87) International publication number:
**WO 2007/035505 (29.03.2007 Gazette 2007/13)**

(54) **AQUEOUS INKJET INK**

WÄSSRIGE TINTENSTRAHLTINTE

ENCRE AQUEUSE POUR IMPRESSION PAR JET D'ENCRE

(84) Designated Contracting States:
**DE FR GB IT**

(30) Priority: **15.09.2005 US 717438 P**

(43) Date of publication of application:
**28.05.2008 Bulletin 2008/22**

(73) Proprietor: **E.I. DU PONT DE NEMOURS AND COMPANY**
**Wilmington, DE 19898 (US)**

(72) Inventor: **ELLIS, Scott, W.**
**Wilmington, Delaware 19803 (US)**

(74) Representative: **Heinemann, Monica**
**Abitz & Partner**
**Patentanwälte**
**Postfach 86 01 09**
**81628 München (DE)**

(56) References cited:
**EP-A- 1 416 006     WO-A-03/029318**
**WO-A-03/091347     US-A1- 2004 097 615**

**Description**

BACKGROUND OF THE INVENTION

Field of the Invention

The present invention pertains to an aqueous inkjet ink, preferably white in color, comprising a polymerically dispersed titanium dioxide and a crosslinked polyurethane binder. The invention also pertains to an ink set with an aqueous white ink as one of its inks. The invention also pertains to a method of inkjet printing with the ink and ink set. The use of the dispersed titanium dioxide and crosslinked polyurethane binder described herein results in inkjet inks having adequate stability, and having a particular utility in printing on textiles.

Description of the Related Art

Inkjet printing is a non-impact printing process in which droplets of ink are deposited on print media, such as paper, textile or polymeric substrates, to form the desired image. The droplets are ejected from a printhead in response to electrical signals generated by a microprocessor.

Colored inkjet inks comprise one or more colorants that are dissolved (e.g., dyes) and/or dispersed (e.g., pigments and dispersed dyes) in the ink vehicle. The ink vehicle can be aqueous (predominantly water) or non-aqueous (predominantly organic liquid), and the ink is referred to as aqueous or non-aqueous ink accordingly.

Aqueous ink is advantageous because water is especially environmentally friendly. There are many applications, though, where aqueous ink is typically unsuitable and non-aqueous ink must be used. Many, if not most of these non-aqueous ink applications involve printed articles on hydrophobic substrates, and particularly printed articles on polymer substrates, which will be exposed to sunlight, and the preferred colorants in these applications are pigments because of their well-know advantage in fade resistance compared to dyes.

Dispersion of pigments in a non-aqueous vehicle is substantially different than dispersion in an aqueous vehicle. Generally, pigments that can be dispersed well in water do not disperse well in non-aqueous solvent, and vice versa.

There is a need for improved pigment selection especially for a stable aqueous ink for inkjet inks. In particular, there is a need for white pigments that can be sufficiently stabilized in inkjet compatible formulations so that the resultant ink can be effectively jetted, even after being stored for some period of time with a minimum of mixing prior to the jetting process. In addition, the ability to use an ink containing a white pigment to complement other inks of an ink set can lead to improved images, especially when lighter tones and/or higher degrees of coverage or opacity are needed. The need for a white ink is particularly important for printing on non white substrates, especially non white textiles.

As a result, there is a need for an ink formulation containing a white pigment for use in inkjet systems that provides the needed effects of a white ink, especially for printing images on colored textiles. There is still a further need for an aqueous system that includes all these benefits. The present invention meets these needs.

SUMMARY OF THE INVENTION

In one aspect of the present invention, there is provided an aqueous inkjet ink comprising an aqueous vehicle having dispersed therein:

(a) titanium dioxide pigment dispersed with a polymeric dispersant, and

(b) a crosslinked polyurethane binder additive (different from the polymeric dispersant).

In another aspect of the present invention, there is provided an aqueous inkjet ink comprising an aqueous vehicle to which has been added a titanium dioxide slurry and a crosslinked polyurethane binder additive, wherein the titanium dioxide slurry comprises a titanium dioxide pigment and a polymeric dispersant.

These inkjet inks may further comprise a variety of optional additives of a general type known to those of ordinary skill in the art, as part of the titanium dioxide slurry and/or added to the inkjet ink separately therefrom. Such optional additives include, for example, humectants and rheology modifiers.

The titanium dioxide pigment used herein is white, thus the inkjet inks of the present invention are preferably white. Non-white colored inks can also be made by utilizing one or more additional colorants in the white ink.

In another aspect of the present invention, there is provided an ink set comprising at least two different colored inks, wherein at least one of the inks is a white aqueous ink as described above. Preferably, in addition to the white ink, the ink set comprises a plurality of differently colored pigmented inks.

The aqueous inkjet inks of the present invention are suitable, for example, for use in personal, business and industrial inkjet printers, and numerous other printing applications. Furthermore, they can be used for printing a wide variety of substrates including non-white paper, transparencies, polymer substrates, textiles, etc. The aqueous inkjet inks are particularly useful in the printing of textile substrates, with the white inkjet inks being particularly useful for printing on colored (non-white) textiles as a background to enhance the final printed image.

The present invention thus also provides a method for inkjet printing onto a substrate, comprising the steps of:

(1) providing an inkjet printer that is responsive to digital data signals;

(2) loading the printer with a substrate to be printed;

(3) loading the printer with the above-mentioned inks or inkjet ink sets; and

(4) printing onto the substrate using the inkjet ink set in response to the digital data signals.

These and other features and advantages of the present invention will be more readily understood by those of ordinary skill in the art from a reading of the following detailed description. It is to be appreciated that certain features of the invention which are, for clarity, described above and below in the context of separate embodiments, may also be provided in combination in a single embodiment. Conversely, various features of the invention that are, for brevity, described in the context of a single embodiment, may also be provided separately or in any subcombination. In addition, references in the singular may also include the plural (for example, "a" and "an" may refer to one, or one or more) unless the context specifically states otherwise. Further, reference to values stated in ranges include each and every value within that range.

DETAILED DESCRIPTION OF THE PREFERRED EMBODIMENTS

The present invention provides an aqueous ink, preferably an aqueous white ink, which is made from a polymerically dispersed titanium dioxide and a crosslinked polyurethane binder additive. The polymerically dispersed titanium dioxide pigment and ink made therefrom have improved stability to agglomeration upon storage. The presence of the crosslinked polyurethane binder additive can also improve the slurry and ink stabilities. As a result, the ultimate ink formulation provides a number desirable properties such as good hiding, uniform coverage, and good clarity when applied to surfaces.

Titanium Dioxide Pigment

Titanium dioxide ($TiO_2$) pigment useful in the present invention may be in the rutile or anatase crystalline form. It is commonly made by either a chloride process or a sulfate process. In the chloride process, $TiCl_4$ is oxidized to $TiO_2$ particles. In the sulfate process, sulfuric acid and ore containing titanium are dissolved, and the resulting solution goes through a series of steps to yield $TiO_2$. Both the sulfate and chloride processes are described in greater detail in "The Pigment Handbook", Vol. 1, 2nd Ed., John Wiley & Sons, NY (1988), the relevant disclosure of which is incorporated by reference herein for all purposes as if fully set forth.

The titanium dioxide particles can have a wide variety of average particle sizes of about 1 micron or less, depending on the desired end use application of the ink.

The titanium dioxide pigment is in and of itself white in color.

For applications demanding high hiding or decorative printing applications, the titanium dioxide particles preferably have an average size of less than about 1 micron (1000 nanometers). Preferably, the particles have an average size of from about 50 to about 950 nanometers, more preferably from about 75 to about 750 nanometers, and still more preferably from about 100 to about 500 nanometers. These titanium dioxide particles are commonly called pigmentary $TiO_2$.

For applications demanding white color with some degree of transparency, the pigment preference is "nano" titanium dioxide. "Nano" titanium dioxide particles typically have an average size ranging from about 10 to about 200 nanometers, preferably from about 20 to about 150 nanometers, and more preferably from about 35 to about 75 nanometers. An ink comprising nano titanium dioxide can provide improved chroma and transparency, while still retaining good resistance to light fade and appropriate hue angle. A commercially available example of an uncoated nano grade of titanium oxide is P-25, available from Degussa (Parsippany NJ).

In addition, unique advantages may be realized with multiple particle sizes, such as opaqueness and UV protection. These multiple sizes can be achieved by adding both a pigmentary and a nano grade of $TiO_2$. One preferred embodiment of this invention utilizes such a combination.

The titanium dioxide is preferably incorporated into an ink formulation via a slurry concentrate composition.

The amount of titanium dioxide present in the slurry composition is preferably from about 15 wt% to about 80 wt%, based on the total slurry weight. For slurries wherein the majority of titanium dioxide particles are of a pigmentary size, and preferably those in which the average particle size is greater than about 200 nanometers up to about 1 micron, the amount of titanium dioxide in the slurry is preferably from about 50 wt% to about 75 wt%, based on the total weight of the slurry. For slurries wherein the majority of titanium dioxide particles are of "nano" size, and preferably those in which the average particle size is from about 10 nanometers to about 200 nanometers, the amount of titanium dioxide in the slurry is preferably from about 20 wt% to about 50 wt%, and more preferably from about 25 wt% to about 35 wt%, based on the weight of the slurry.

The titanium dioxide pigment may be substantially pure titanium dioxide or may contain other metal oxides, such as silica, alumina and zirconia. Other metal oxides may become incorporated into the pigment particles, for example, by co-oxidizing or co-precipitating titanium compounds with other metal compounds. If co-oxidized or co-precipitated metals are present, they are preferably present as the metal oxide in an amount from about 0.1 wt% to about 20 wt%, more preferably from about 0.5 wt% to about 5 wt%, and still more preferably from about 0.5 wt% to about 1.5 wt%, based on the total titanium dioxide pigment weight.

The titanium dioxide pigment may also bear one or more metal oxide surface coatings. These coatings may be applied using techniques known by those skilled in the art. Examples of metal oxide coatings include silica, alumina, alumina-silica, boria and zirconia, among others. Such coatings may optionally be present in an amount of from about 0.1 wt% to about 10 wt%, and preferably from about 0.5wt% to about 3 wt%, based on the total weight of the titanium dioxide pigment. These coatings can provide improved properties including reducing the photoreactivity of the titanium dioxide. Commercial examples of such coated titanium dioxides include R700 (alumina-coated, available from E.I. DuPont de Nemours, Wilmington DE), RDI-S (alumina-coated, available from Kemira Industrial Chemicals, Helsinki, Finland), R706 (available from DuPont, Wilmington DE) and W-6042 (a silica alumina treated nano grade titanium dioxide from Tayco Corporation, Osaka Japan).

The titanium dioxide pigment may also bear one or more organic surface coatings, such as, for example, carboxylic acids, silanes, siloxanes and hydrocarbon waxes, and their reaction products with the titanium dioxide surface. The amount of organic surface coating, when present, generally ranges from about 0.01 wt% to about 6 wt%, preferably from about 0.1 wt% to about 3 wt%, more preferably about 0.5 wt% to about 1.5 wt%, and still more preferably about 1 wt%, based on the total weight of the pigment.

Dispersants

One or more dispersants are employed in the present ink jet inks to stabilize the titanium dioxide. The dispersants are added to a titanium dioxide and this mixture is subject to dispersive forces to achieve a stable dispersion (slurry). This dispersion in turn is used to prepare the ink formulation.

Dispersants can be soluble or dispersed polymer(s). They can be any suitable polymer, for example, soluble polymers may include linear homopolymers, copolymers or block polymers; they also can be structured polymers including graft or branched polymers, stars, dendrimers, etc. The dispersed polymers can include latexes, polyurethane dispersions, etc. The polymers may be made by any known process including but not limited to free radical, group transfer, ionic, RAFT, condensation and other types of polymerization.

The dispersant used to stabilize the pigment is preferably a dispersed polymer. Structured or random polymers may be used, although structured polymers are preferred for use as dispersants for reasons well known in the art. The term "structured polymer" means polymers having a block, branched or graft structure. Examples of structured polymers include AB or BAB block copolymers such as disclosed in US5085698; ABC block copolymers such as disclosed in EP-A-0556649; and graft polymers such as disclosed in US5231131. Other polymeric dispersants that can be used are described, for example, in US6117921, US6262152, US6306994 and US6433117. The disclosure of each of these publications is incorporated herein by reference for all purposes as if fully set forth.

Polymer dispersants suitable for use in the present invention generally comprise both hydrophobic and hydrophilic monomers. Some examples of hydrophobic monomers are methyl methacrylate, n-butyl methacrylate, 2-ethylhexyl methacrylate, benzyl methacrylate, 2-phenylethyl methacrylate and the corresponding acrylates. Examples of hydrophilic monomers are methacrylic acid, acrylic acid, dimethylaminoethyl(meth)acrylate and salts thereof. Also quaternary salts such as dimethylaminoethyl(meth)acrylate may be employed.

Preferably, at least one of the dispersant provides anionic stabilization to the titanium dioxide pigment. In such a case, the dispersant applied to the pigment creates an anionic surface charge ("anionic pigment dispersion"). Preferably, that surface charge is imparted predominately by ionizable carboxylic acid (carboxylate) groups.

In one embodiment, a combination of a graft and block copolymers are used as co-dispersants for the titanium dioxide pigment. A non-limiting example of such co-dispersants is described in US Application Serial No. 10/872,856 (filed June 21, 2004), the disclosure of which are incorporated by reference herein for all purposes as if fully set forth. This combination of dispersants is effective in stabilizing titanium dioxide pigment slurries and, furthermore, provides enhanced stability in the ink formulations.

More specifically, the co-dispersants comprise a first dispersant which is a graft copolymer, a second dispersant which is a block copolymer and, optionally, a third dispersant which is a phosphated polymer. Both the first and second dispersants preferably contain acid functionality, and can be made water soluble or dispersible by neutralizing at least a portion of the acid functional groups with a base such as ammonia, potassium hydroxide, sodium hydroxide, an amine, such as dimethyl ethyl amine, amino methyl propanol and the like.

The optional third dispersant is a phosphated polymer that is different from the first and second dispersants.

First Dispersant

Note: All molecular weights referred to herein are determined by Gel Permeation Chromatography using polystyrene as a standard.

The first dispersant is a graft copolymer dispersant preferably having a weight average molecular weight of from about 4000 to about 100000, and more preferably from about 10000 to about 40000. The graft copolymer dispersant can be a block or comb copolymer. Mixtures of more than one graft copolymer can also be used.

The graft copolymer comprises from about 90% to about 50% by weight of a polymeric backbone and, correspondingly, from about 10% to about 50% by weight of polymeric side chains attached to the backbone (the backbone and side chains together being 100 wt%).

The polymeric backbone is a hydrophobic (relative to the side chains) adsorbing segment. The side chains are individually hydrophilic stabilizing segments. The side chains are attached to the backbone at a single terminal point.

As just indicated, the backbone of the graft copolymer dispersant is hydrophobic relative to the side chains. The backbone comprises polymerized "non-functional" ethylenically unsaturated hydrophobic monomers such as alkyl methacrylates and acrylates, and cycloaliphatic methacrylates and acrylates. The backbone may still further comprise up to about 20% by weight, and preferably from about 1% to about 10% by weight, based on the weight of the backbone, of polymerized ethylenically unsaturated acid monomers, as well as up to about 30% by weight, based on the weight of the backbone, of other polymerized ethylenically unsaturated monomers containing functional groups.

The backbone of the graft copolymer has an affinity for the surface of the pigment used in the slurry and anchors the copolymer to the pigment, thus keeping the pigment dispersed and preventing the graft copolymer from returning to the aqueous phase.

The side chains of the graft copolymer are hydrophilic macromonomers that preferably have a weight average molecular weight of from about 1000 to about 30000, and more preferably from about 1500 to about 8000. The side chains preferably comprise from about 2% to about 100% by weight, more preferably from about 20% to about 60% by weight, based on the weight of the macromonomer, of polymerized ethylenically unsaturated "hydrophilic" monomers, such as ethylenically unsaturated monomers containing an acid group or a nonionic hydrophilic group.

When an appropriate amount of the acid functionality is neutralized, the side chains are hydrophilic and keep the pigment uniformly dispersed in the slurry and resulting ink.

The side chains can be a mixture of ionic and non-ionic groups or mixtures either in the same side chain or in different side chains.

The macromonomer contains a single terminal ethylenically unsaturated group, which is polymerized into the backbone of the graft copolymer.

Further details on the first dispersant can be found by reference to previously incorporated US Application Serial No. 10/872,856 (filed June 21, 2004).

Second Dispersant

The second dispersant is a block copolymer preferably of type AB, ABA or ABC, or mixtures thereof At least one of the blocks, A, B, or C is an adsorbing segment. At least one of the blocks, A, B, or C is a stabilizing segment. By "adsorbing segment" it is meant that the segment is designed to adsorb onto the surface of a titanium dioxide pigment, for example, by acid-base or other bonding interactions. By "stabilizing segment" it is meant that the segment is designed to provide a steric stabilization of the pigment particle against flocculation in a slurry composition. Generally, the adsorbing segments of the block copolymer are hydrophobic, in comparison to the stabilizing segment, and are designed to adhere to the pigment surface, while the stabilizing segments are generally hydrophilic and are soluble in (aqueous) processing media, for example, media used in finishing crude titanium dioxide pigment.

The hydrophobic adsorbing segment preferably comprises polymerized "non-functional" ethylenically unsaturated hydrophobic monomers such as are listed hereinafter, and further comprises polymerized ethylenically unsaturated monomers having functional groups that enhance the pigment binding force. Monomers having functional groups are preferably present in an amount up to about 40% by weight, based on the total weight of the adsorbing segment. For example, monomers with acid functional groups may be incorporated in the hydrophobic portion to bind with basic groups on the titanium dioxide pigment surface. Monomers with amine groups may be incorporated in the hydrophobic portion to bind with acid groups that may be present on the titanium dioxide surface. Other functional monomers that have known affinity for titanium dioxide, such as monomers with silane groups, etc., may also be incorporated in the hydrophobic portion.

The second dispersant preferably has a number average molecular weight of from about 1000 to about 15000, and more preferably from about 2000 to about 5000. The adsorbing segment preferably has a number average molecular weight of from about 1000 to about 5000, and more preferably from about 1000 to about 3000. The stabilizing segment preferably has a number average molecular weight of from about 1000 to about 5000, and more preferably from about 1000 to about 3000.

Further details on the second dispersant can be found by reference to previously incorporated US Application Serial No. 10/872,856 (filed June 21, 2004).

Third Dispersant

The optional third dispersant is a phosphated polymer dispersant comprising a hydrophilic stabilizing segment and a hydrophobic adsorbing segment. The phosphated polymer can be a graft copolymer, a block copolymer or a random copolymer that has phosphate functionality in either the stabilizing segment, adsorbing segment or both.

The adsorbing segment of the phosphated polymer mainly comprises polymerized ethylenically unsaturated "non-functional" hydrophobic monomers, such as alkyl (meth)acrylates, cycloaliphatic (meth)acrylates and aryl (meth) acrylates, such as are listed hereinafter. The term (meth)acrylate refers to both the acrylate and methacrylate esters.

The adsorbing segment preferably further comprises from about 1% to about 20% by weight, and more preferably from about 1% to about 10% by weight, based on the total weight of the copolymer, of polymerized ethylenically unsaturated monomers that have attached thereto a phosphate group, or a group that can be converted to a phosphate group.

The hydrophilic stabilizing segment of the phosphated dispersant comprises polymerized ethylenically unsaturated hydrophilic monomers, such as ethylenically unsaturated monomers containing an acid group or a nonionic hydrophilic group.

The phosphated copolymer dispersant preferably has a number average molecular weight of from about 4000 to about 25000, and more preferably from about 5000 to about 20000. The adsorbing segment typically has a number average molecular weight of from about 2000 to about 10000, and preferably from about 4000 to about 7000. The stabilizing segment typically has a number average molecular weight of from about 2000 to about 15000, and preferably from about 4000 to about 7000. The adsorbing segment typically comprises from about 20% to about 80% by weight of the polymer, and correspondingly the stabilizing segment typically comprises from about 80% to about 20% by weight of the polymer (the adsorbing and stabilizing segments being 100 wt% total).

Further details on the third dispersant can be found by reference to previously incorporated US Application Serial No. 10/872,856 (filed June 21, 2004).

Preparation of Inks

The inks of this invention are preferably made from titanium dioxide slurries by conventional process known to the art. That is, the titanium dioxide slurry is processed by routine operations to become an ink which can be successfully jetted in an inkjet system.

Typically, in preparing an ink, all ingredients except the pigment slurry are first mixed together. After the other ingredients are mixed, the slurry is added. Common ingredients in ink formulations useful with the titanium dioxide slurries include one or more humectants, a co-solvent, one or more surfactants and biocide. A typical ink using the polymerically dispersed titanium dioxide will have the following formulation:

| Ingredient | Weight % |
|---|---|
| TiO$_2$ Slurry* | 1.5 - 50 |
| Binder Additive | 1 - 15 |
| Humectant(s) | 5 - 20 |
| Co-Solvent | 5 - 30 |
| Surfactant(s) | 0.5 - 1.0 |
| Biocide | 0.15 |

(continued)

| Ingredient | Weight % |
|---|---|
| Water | Bal. to 100% |

*Solids content~70%; includes TiO$_2$ and dispersants

The polymerically dispersed titanium dioxide in combination with the crosslinked polyurethane binder used in this invention stabilizes and keeps the pigments deflocculated over long periods of time. As a result, the ink formulation is stable and non-flocculated or agglomerated and has other advantageous properties when applied to surfaces as an ink.

Alternatively, the ink may be prepared without the intervening step of preparing a pigment slurry. That is, the TiO$_2$ pigment and other ingredients of the ink can be combined in any order and this mixture is subject to dispersing mixing. The intensity of the mixing used to obtain the final ink formulation can range from milling using a ball mill to more intense dispersive mixing such as HSD, roll milling and/or media milling. There are no constraints on the milling media.

Titanium Dioxide Slurries/Dispersions

The titanium dioxide slurries used in this invention comprise a liquid carrier. The carrier is selected from the group consisting of water, glycol ethers and mixtures thereof The liquid carrier should be capable of providing a stable slurry. Typically the liquid carrier is water, or a mixture of water and a water-miscible co-solvent.

Water used in the preparation of the titanium dioxide slurries (and inks) is preferably deionized. That is, the water has been treated to remove unwanted ions that may affect the stability and other properties of the slurries. For example, water may be passed through an ion exchange column to remove the unwanted ions. Preferably, the metal ion content of the deionized water provides an electrical resistance less than about 0.05 micro-ohm-cm electrical resistivity as measured using ASTM method D 1125.

Preferably, the liquid carrier is aqueous, that is, comprises water in a predominant amount.

The titanium dioxide slurries may optionally comprise one or more additives that are compatible with the end use in inkjet inks.

For example, the slurry may optionally comprise a humectant. A humectant may be considered a co-solvent. Typically, although not always, a humectant has a higher boiling point than the primary solvent, that is, the liquid carrier. A humectant is generally added to prevent drying during storage. Humectants may also help retard settling.

Humectants are especially useful additives to formulations that have a propensity for chalking. Chalking occurs when solvent (that is, liquid carrier for the slurries of this invention) evaporates, causing the pigment to dry on surfaces and sides of storage vessels, and potentially flake off and fall back into the slurry. Chalking can be a serious problem, especially for titanium dioxide pigments. For example, if dried pigment agglomerates are introduced into an ink jet formulation, an unacceptable level of nozzle outs may occur. Humectants retard solvent evaporation and thereby retard chalking.

Examples of suitable humectants for use in this invention include polyhydric alcohols such as ethylene glycol, diethylene glycol, propylene glycol, butylene glycol, triethylene glycol, 1,5-pentanediol and 1,2,6-hexanetriol; glycol ethers such as dipropylene glycol monomethyl ether and propylene glycol n-propyl ether; and others including trimethylolpropane, trimethylolethane, glycerin, polyethylene glycol and dipropylene glycol. Ethylene glycol is preferred.

The slurry may also optionally comprise a rheology modifier. A rheology modifier can be any known commercially available rheology modifiers, such as Solthix® thickeners available from Avecia. Other useful rheology modifiers include cellulose and synthetic hectorite clays. Synthetic hectorite has the formula:

$$[Mg_wLi_xSi_8O_{20}H_{4-y}F_z]^{2-}$$

wherein w = 3 to 6; x = 0 to 3; y = 0 to 4; z = 12 - 2w - x, wherein the negative lattice charge is balanced by counterions, and wherein the counterions are selected from the group consisting of Na$^+$, K$^+$, NH$_4^+$, Li$^+$, Mg$^{2+}$, Ca$^{2+}$, Ba$^{2+}$, N(CH$_3$)$_4^+$, and mixtures thereof. Synthetic hectorite clays are commercially available, for example, from Southern Clay Products, Inc., and include Laponite®; Lucenite SWN®, Laponite S®, Laponite XL®, Laponite RD® and Laponite RDS® brands of synthetic hectorite.

The titanium dioxide slurry used in this invention can be prepared by mixing the components in a mixing vessel. Components can be added sequentially or simultaneously in any order. The following provides a typical process to prepare the slurry, but should not be considered limiting. Typically, a two-step process is used involving a first mixing step followed by a second grinding step. The first step comprises mixing all of the ingredients, that is, titanium dioxide pigment, dispersants, liquid carrier and any optional additives to provide a blended "pre-mix". Mixing generally occurs in a stirred vessel. High-speed dispersers are particularly suitable for the mixing step. Preferably, when multiple dispersants are used, the dispersants are combined before being introduced into the mixture of other ingredients. The combined dispersants are typically added incrementally.

The second step comprises grinding of the pre-mix to produce the slurry. Preferably grinding occurs by media milling although other techniques can be used. Following a grinding step, the slurry is filtered. Filtration can be performed using any means known in the art, and is typically accomplished by use of standard, commercially available filters, between 1 and 10 microns in size.

Ink Vehicle

The ink vehicle is an aqueous vehicle, that is, a liquid vehicle with a predominant amount of water. In addition to water, water-miscible cosolvents (also referred to as humectants as mentioned above) can be used to prepare the ink vehicle. Representative examples of water-miscible co-solvents are disclosed in US5085698 (the disclosure of which is incorporated by reference herein for all purposes as if fully set forth).

Examples of water-soluble organic solvents and humectants include: alcohols, ketones, keto-alcohols, ethers and others, such as thiodiglycol, sulfolane, 2-pyrrolidone, 1,3- dimethyl-2-imidazolidinone and caprolactam; glycols such as ethylene glycol, diethylene glycol, triethylene glycol, tetraethylene glycol, propylene glycol, dipropylene glycol, tripropylene glycol, trimethylene glycol, butylene glycol and hexylene glycol; addition polymers of oxyethylene or oxypropylene such as polyethylene glycol, polypropylene glycol and the like; triols such as glycerol and 1,2,6-hexanetriol; lower alkyl ethers of polyhydric alcohols, such as ethylene glycol monomethyl ether, ethylene glycol monoethyl ether, diethylene glycol monomethyl, diethylene glycol monoethyl ether; lower dialkyl ethers of polyhydric alcohols, such as diethylene glycol dimethyl or diethyl ether; urea and substituted ureas.

If a mixture of water and a water-soluble solvent is used, the aqueous vehicle typically will contain about 50% to about 95% water with the balance (i.e., about 50% to about 5%) being the water-soluble solvent. Preferred compositions contain about 60% to about 95% water, based on the total weight of the aqueous vehicle.

Of course, a portion of the aqueous vehicle is the slurry vehicle as well as vehicles included from other components, with the remainder of the vehicle components being added during ink preparation.

Other Ingredients

The inks may optionally contain one or more other ingredients (additives) such as, for example, surfactants, bactericides, fungicides, algicides, sequestering agents, buffering agents, corrosion inhibitors, light stabilizers, anti-curl agents, thickeners, and/or other additives and adjuvants well-known in the relevant art. As indicated above and as discussed below, the inks also contain a crosslinked polyurethane binder additive.

These other ingredients may be formulated into the inks and used in accordance with this invention, to the extent that such other ingredients do not interfere with the stability and jettability of the ink, which may be readily determined by routine experimentation. The inks may be adapted by these additives to the requirements of a particular inkjet printer to provide an appropriate balance of properties such as, for instance, viscosity and surface tension, and/or may be used to improve various properties or functions of the inks as needed.

The amount of each ingredient must be properly determined, but is typically in the range of from about 0 to about 15% by weight and more typically from about 0.1% to about 10% by weight, based on the total weight of the ink.

Surfactants may be used and useful examples include ethoxylated acetylene diols (e.g. Surfynols® series from Air Products), ethoxylated primary (e.g. Neodol® series from Shell and Tomadol® series from Tomah Products) and secondary (e.g. Tergitol® series from Union Carbide) alcohols, sulfosuccinates (e.g. Aerosol® series from Cytec), organosilicones (e.g. Silwet® series from GE Silicons) and fluoro surfactants (e.g. Zonyl® series from DuPont). Surfactants, if used, are typically in the amount of from about 0.01 to about 5% and preferably from about 0.2 to about 2%, based on the total weight of the ink.

Crosslinked Polyurethane Binder Additive

In accordance with the present invention, the binder additive is a crosslinked polyurethane. The term "polyurethane" refers to a polymer containing urethane groups, as that term would be understood by persons of ordinary skill in the art. A "crosslinked polyurethane" generally refers to a polyurethane containing crosslinking.

The crosslinked polyurethane binder may be stabilized in the final ink aqueous vehicle by having ionic substituents such as carboxylic acids, sulfur containing acids, amine groups, and other similar ionic groups. Alternatively, the binder may be stabilized by external surfactants.

The crosslinked polyurethane will generally be a dispersed polymer, and is generally added to the remainder of the ink components in the form of a dispersion in an aqueous vehicle.

A preferred crosslinked polyurethane and dispersion additive is described in US20050182154, the disclosure of which is incorporated by reference herein for all purposes as if fully set forth.

As indicated above, a crosslinked polyurethane refers to a polymer containing urethane groups and crosslinking, as those terms are understood by persons of ordinary skill in the art. These polymers may also incorporate hydrophilic functionality to the extent required to maintain a stable dispersion of the polymer in the aqueous vehicle. The main advantage of incorporating hydrophilic functionality into the polymer is that the polymer can be dispersed with minimal energy so that the dispersing processes do not require strong shear forces, resulting in finer particle size, better dispersion stability, and reduced water sensitivity of the polymers obtained after evaporation of the water. These polymers may also incorporate ionic and nonionic functionality to the extent required to maintain a stable dispersion of the polymer in the aqueous vehicle. Alternatively, these polymers can be prepared by emulsification of hydrophobic polyurethanes in water with the aid of suitable external emulsifiers, surfactants and the like, and/or utilizing strong shear forces to form an oil-in-water dispersion.

In general, the stability of the crosslinked polyurethane in the aqueous vehicle is achieved by incorporating anionic, cationic and/or non-ionic components in the polyurethane polymer, which facilitates stabilizing the crosslinked polyurethane in aqueous systems. External emulsifiers may also be added to stabilize the polyurethane. Combinations of incorporated anionic, cationic and/or non-ionic components, and/or external emulsifiers can also be used.

Examples of suitable polyurethanes are those in which the polymer is predominantly stabilized in the dispersion through incorporated anionic functionality, and an example of this is anionic functionality such as neutralized acid groups ("anionically stabilized crosslinked polyurethane").

Suitable crosslinked polyurethanes are typically prepared by multi-step synthetic processes in which an NCO terminated prepolymer is formed, this prepolymer is added to water or water is added to the prepolymer forming a polymer dispersed in water (aqueous dispersion) and subsequently chain extended in the aqueous phase. The prepolymer can be formed by a single or multi-step process. Chain extension, if used, can also be a single or multi-step process. The crosslinking can occur at any part of the multi-step process.

After the crosslinked polyurethane is prepared it is included with the other ink components to produce the inkjet ink. The details of the preparation of the ink are, in general, familiar to those skilled in the art.

It is preferred that the crosslinking for the polyurethane is substantially completed prior to its addition to the ink formulation. Other uses of polyurethanes in inkjet system can require that there is a component in the polyurethane which undergoes crosslink at the time of the ink formulation, or more likely at the time of the printing, or post treatment of the printed material. Alternatively, a crosslinking species can be added to affect the crosslinking at the ink formulation time or later. Each of these processes can be described as a post-crosslinking system.

A stable aqueous dispersion of crosslinked polyurethane particles suitable for use as the binder additive has a solids content of up to about 60% by weight, preferably from about 15 to about 60% by weight, and more preferably from about 30 to about 40% by weight, based on the total dispersion weight. However, it is always possible to dilute the dispersions to any minimum solids content desired.

The means to achieve the crosslinking of the polyurethane generally relies on at least one component of the polyurethane (starting material and/or intermediate) having 3 or more functional reaction sites. Reaction of each of the 3 (or more) reaction sites will produce a crosslinked polyurethane (3-dimensional matrix). When only two reactive sites are available on each reactive components, only linear (albeit possibly high molecular weight) polyurethanes can be produced. Examples of crosslinking techniques include but are not limited to the following:

the isocyanate-reactive moiety has at least 3 reactive groups, for example polyfunctional amines or polyol;

the isocyanate has at least 3 isocyanate groups;

the prepolymer chain has at least 3 reactive sites that can react via reactions other than the isocyanate reaction, for example with amino trialkoxysilanes;

addition of a reactive component with at least 3 reactive sites to the polyurethane prior to its use in the inkjet ink preparations, for example tri-functional epoxy crosslinkers;

addition of a water-dispersible crosslinker with oxazoline functionality;

synthesis of a polyurethane with carbonyl functionality, followed by addition of a dihydrazide compound;

and any combination of the these crosslinking methods and other crosslinking means known to those of ordinary skill in the relevant art.

The amount of crosslinking of the polyurethane to achieve the desired properties can vary over a broad range. While not being bound to theory, the amount of crosslinking is a function of the polyurethane composition, the whole sequence of reaction conditions utilized to form the polyurethane and other factors known to those of ordinary skill in the art. The extent of crosslinking, the inkjet ink formulation, the colorant, other inks in the inkjet set, the textile, the post treatment exposure to heat and/or pressure, and the printing technique for the textile, all contribute to the final printed textile performance. For the printing technique this can include pre and post treatment of the textile.

Based on techniques described herein, a person of ordinary skilled in the art is able to determine, via routine experimentation, the crosslinking needed for a particularly type of polyurethane to obtain an effective inkjet ink for textiles.

The amount of crosslinking can be measured by a standard tetrahydrofuran insolubles test. For the purposes of definition herein, the tetrahydrofuran (THF) insolubles of the polyurethane dispersoid is measured by mixing 1 gram of the polyurethane dispersoid with 30 grams of THF in a pre-weighed centrifuge tube. After the solution is centrifuged for 2 hours at 17,000 rpm, the top liquid layer is poured out and the non-dissolved gel in the bottom is left. The centrifuge tube with the non-dissolved gel is re-weighed after the tube is put in the oven and dried for 2 hours at 110°C.

$$\text{\% THF insolubles of polyurethane} = (\text{weight of tube and non-dissolved gel} - \text{weight of tube})/(\text{sample weight} * \text{polyurethane solid \%})$$

The upper limit of crosslinking is related to the ability to make a stable aqueous polyurethane dispersion. If a highly crosslinked polyurethane has adequate ionic or non-ionic functionality such that it is a stable when inverted into water, then its level of crosslinking will lead to an improved inkjet ink for textiles. The emulsion/dispersion stability of the crosslinked polyurethane can be improved by added dispersants or emulsifiers. The upper limit of crosslinking as measured by the THF insolubles test is about 90%, although preferably the upper limit is about 60%.

The lower limit of crosslinking in the polyurethane is about 1% or greater, preferably about 4% or greater, and more preferably about 10% or greater, as measured by the THF insolubles test.

An alternative way to achieve an effective amount of crosslinking in the polyurethane is to choose a polyurethane that has crosslinkable sites, then crosslink those sites via self crosslinking and/or added crosslinking agents; Examples of self-crosslinking functionality includes, for example, silyl functionality (self-condensing) available from certain starting materials as indicated above, as well as combinations of reactive functionalities incorporated into the polyurethanes, such as epoxy/hydroxyl, epoxy/acid and isocyanate/hydroxyl. Examples of polyurethanes and complementary crosslinking agents include: (1) a polyurethane with isocyanate reactive sites (such as hydroxyl and/or amine groups) and an isocyanate-functional crosslinking reactant, and (2) a polyurethane with unreacted isocyanate groups and an isocyanate-reactive crosslinking reactant (containing, for example, hydroxyl and/or amine groups). The complementary reactant can be added to the polyurethane, such that crosslinking can be done prior to its incorporation into an ink formulation. The crosslinking should preferably be substantially completed prior to the incorporation of the polyurethane into the ink formulation. This crosslinked polyurethane preferably has from about 1% to about 90 % crosslinking as measured by the THF insolubles test.

Combinations of two or more crosslinked polyurethanes (either combined into a single binder additive, or in separate binder additives) may also be utilized in the formulation of the ink.

The crosslinked polyurethane dispersoid can be mixed with other binders, including latexes, and the like. A non-limiting list of these binders includes dispersed acrylics, neoprenes, dispersed nylons, and non-crosslinked polyurethanes dispersions (as defined herein by the THF insolubles test).

The term "latex" as used herein refers to a polymer particle that is dispersed in the vehicle. A latex is sometimes referred to as an "emulsion polymer". A latex is stabilized to dispersion by stabilizers which can be part of the polymer itself (internal stabilizers) or separate species (external stabilizers) such as emulsifiers.

Commercially available latexes have a median particle size in the range of about 0.02 to about 3 microns. For the present invention, the median particle size should preferably be less than about 1 micron, more preferably less than about 0.5 microns, and most preferably in the range of about 0.03 to about 0,3 microns.

Polymer synthesis for these latexes can be performed under emulsion polymerization conditions with standard free radical initiators, chain transfer initiators and surfactants. Chain transfer agents such as dodecyl mercaptan and sulfur are used to control the molecular weight, branching, and gel content. Molecular weight is typically in the range of about 100,000 to over about 1,000,000 Dalton. The percent conversion is also controlled to limit the gel content.

Further details about the crosslinked polyurethane, binder additive and use in aqueous inkjet inks can be found by reference to previously incorporated US20050182154.

Proportions of Ink Ingredients

The amount of aqueous vehicle in the ink (total, non-solids) is typically in the range of from about 70 wt% to about 97.5 wt%, and preferably from about 80 wt% to about 97.5 wt%, based on the total weight of the ink.

Titanium dioxide is preferably present in the (white) inks of this invention in a range of from about 1 wt% to about 25 wt% (solids), more preferably from about 4 wt% to about 18 wt% (solids), based on the total weight of the ink.

The inks of the present invention, and titanium dioxide slurry used in those inks, preferably have an overall dispersant to pigment weight ratio (D/P) of from about 0.0025:1 to about 0.25:1, preferably from about 0.05:1 to about 0.175:1, and more preferably from about 0.075:1 to about 0.14:1. If more than one dispersant is used, the overall dispersant to pigment ratio is the sum total of D/P contributions from each dispersant present.

When the preferred combination of dispersants is utilized, as described above, the weight ratio of the first and second dispersants is preferably from about 10:90 to about 90:10, more preferably from about 25:75 to about 75:25, and still more preferably from about 40:60 to about 60:40.

When the optional third dispersant is present, it is preferably present in an amount of from about 0.0025:1 to about 0.05:1, more preferably from about 0.005:1 to about 0.04:1, and still more preferably from about 0.005:1 to 0.02:1, as the weight ratio of third dispersant to pigment.

The polymeric binder is preferably present in the (white) inks of this invention in a range of from about 1 wt% to about 15 wt% (solids), more preferably from about 3 wt% to about 12 wt% (solids), and especially from about 5 wt% to about 10 wt% (solids), based on the total weight of the ink.

Ink Properties

Jet velocity, drop size and stability are greatly affected by the surface tension and the viscosity of the ink. Inkjet inks typically have a surface tension in the range of about 20 dyne/cm to about 70 dyne/cm at 25°C. Viscosity can be as high as 30 cps at 25°C, but is typically somewhat lower and preferably is in the range of from about 1 cP to about 30 cP at 25°C. The inks have physical properties compatible with a wide range of ejecting conditions, i.e., driving frequency of the piezo element, or ejection conditions for a thermal head, for either a drop-on-demand device or a continuous device, and the shape and size of the nozzle. The inks of this invention should have excellent storage stability for long periods so as not clog to a significant extent in an ink jet apparatus. Further, it should not alter the materials of construction of the ink jet printing device it comes in contact with, and be essentially odorless and non-toxic. The inks of this invention can exhibit soft settling, but can be gently mixed prior to use in the ink jet printing system.

Although not restricted to any particular viscosity range or printhead, the inventive inks are suited to lower viscosity applications such as those required by higher resolution (higher dpi) printheads that jet small droplet volumes, e.g. less than about 20 pL. Thus the viscosity (at 25°C) of the inventive inks can be less than about 7 cps, is preferably less than about 5 cps, and most advantageously is less than about 3.5 cps.

The ink formed from the aqueous vehicle, dispersed titanium dioxide and crosslinked polyurethane binder additive forms a relatively stable ink. When settling does occur, the settling is "soft" settling, meaning the titanium dioxide pigment can be readily re-dispersed and rejuvenated by low shear mixing, so as not to result in plugging of ink jet nozzles. Low shear mixing includes, for example, shaking by hand or stirring with an impeller or mixing blades at speeds of less than about 500 rpm wherein no grinding occurs. This is in contrast to "hard" settling, which refers to the settling of titanium dioxide particles that cannot be readily re-dispersed to an acceptable level for ink jet inks.

Ink Sets

The term "ink set" refers to all the individual inks or other fluids an inkjet printer is equipped to jet.

Ink sets contain the ink described above (preferably white), and one or more other inks. The non-white inks of the ink set contain other colorants, and preferably other pigment colorants, dispersed in a vehicle. The vehicle can be aqueous or non-aqueous, but aqueous vehicles (as described above) are preferred.

A wide variety of organic and inorganic pigments, alone or in combination, may be selected to make the other inks. The pigment particles should be sufficiently small to permit free flow of the ink through the inkjet printing device, especially at the ejecting nozzles that usually have a diameter ranging from about 10 micron to about 50 micron. The particle size also has an influence on the pigment dispersion stability, which is critical throughout the life of the ink. Brownian motion of minute particles will help prevent the particles from flocculation. It is also desirable to use small particles for maximum color strength and gloss. The range of useful particle size is typically about 0.005 micron to about 15 micron. Preferably, the pigment particle size should range from about 0.005 to about 5 micron and, most preferably, from about 0.005 to about 1 micron. The average particle size as measured by dynamic light scattering is less than about 500 nm, preferably less than about 300 nm.

The selected pigment(s) may be used in dry or wet form. For example, pigments are usually manufactured in aqueous media and the resulting pigment is obtained as water-wet presscake. In presscake form, the pigment is not agglomerated to the extent that it is in dry form. Thus, pigments in water-wet presscake form do not require as much deflocculation in the process of preparing the inks as pigments in dry form. A representative selection of such pigments are found, for example, in US5026427, US5086698, US5141556, US5169436 and US6160370, the disclosures of which are incorporated by reference herein for all purposes as if fully set forth. The exact choice of pigment will depend upon color reproduction and print quality requirements of the application.

In the case of organic pigments, the ink may contain up to approximately 30%, preferably about 0.1 to about 25%, and more preferably about 0.25 to about 10%, pigment by weight based on the total ink weight. If an inorganic pigment is selected, the ink will tend to contain higher weight percentages of pigment than with comparable inks employing organic pigment, and may be as high as about 75% in some cases, since inorganic pigments generally have higher specific gravities than organic pigments. The levels of pigment actually employed in the other inks of the ink set are those levels that are typically needed to impart the desired OD to the printed image. Typically, such pigment levels are in the range of from about 0.1 to about 10% by weight, based on the total weight of the ink.

By definition, pigments do not form (to a significant degree) a solution in the vehicle and must be dispersed. Suitable dispersants for such other pigmented inks are generally described above. Self-dispersing pigments (SDP's) can also be used and, under certain circumstances, may be advantageous over traditional dispersant stabilized pigments from the standpoint of greater stability and lower viscosity at the same pigment loading. This can provide greater formulation latitude in final ink.

SDPs are surface modified with dispersibility-imparting groups to allow stable dispersions to be achieved without the use of a separate pigment dispersant (such as a polymeric dispersant). For dispersion in an aqueous vehicle, the SDPs are surface-modified pigments in which one or more hydrophilic groups are attached to the pigment surface. Most typically, the hydrophilic groups are ionizable hydrophilic groups.

The SDPs may be prepared by grafting a functional group or a molecule containing a functional group onto the surface of the pigment, by physical treatment (such as vacuum plasma), or by chemical treatment (for example, oxidation with ozone, hypochlorous acid or the like). A single type or a plurality of types of hydrophilic functional groups may be bonded to one pigment particle.

SDP's are described, for example, in US5571311, US5609671, US5968243, US5928419, US6323257, US5554739, US5672198, US5698016, US5718746, US5749950, US5803959, US5837045, US5846307, US5895522, US5922118, US6123759, US6221142, US6221143, US6281267, US6329446, US6332919, US6375317, US 6287374, US6398858, US6402825, US6468342, US6503311, US6506245, US6852156. The disclosures of the preceding references are incorporated by reference herein for all purposes as if fully set forth.

The dispersant or surface treatment applied to the pigment preferably creates an anionic surface charge ("anionic pigment dispersion"). Preferably, that surface charge is imparted predominately by ionizable carboxylic acid (carboxylate) groups. Preferably, the non-white other inks comprise an anionically stabilized pigment dispersed in an aqueous vehicle.

As indicated above, the other inks of the ink set can be aqueous or non-aqueous. The choice between the two systems is dictated by the requirements for matching the ink system to the printed substrate. For paper and textile substrates, aqueous systems are typically preferred. However, for plastic substrates non-aqueous vehicles may be preferred.

The other pigmented inks may contain other components and additives as described above or as otherwise are known to those of ordinary skill in the art and may, in a general sense, be considered known to those of ordinary skill in the art. Selection of other aqueous inks for the ink set can readily be made based upon the desired end use and compatibility with the inks of the present invention.

A variety of other inks and ink sets are available for use in combination with the in of the present invention. Commercially available pigmented ink sets for textile uses include, for example, DuPont™ Artistri™ P700 and P5000 series inks.

The ink sets containing a white ink provide significant new breadth to printing capabilities.

In one preferred embodiment, the ink set preferably comprises at least four differently colored inks - in addition to a white ink, the ink sets also contains a cyan, magenta and yellow ink. In addition to white and CMY, it may also be preferred that the ink sets further comprise a black ink.

In another preferred embodiment, the ink sets comprise a white ink and a black ink.

In addition to the CMYKW inks mentioned above, the ink sets may contain additional differently colored inks, as well as different strength versions of the CMYKW and other inks.

For example, the inks sets of the present invention can comprise full-strength versions of one or more of the inks in the ink set, as well as "light" versions thereof (having reduced pigment content).

Additional colors for the inkjet ink set include, for example, orange, violet, green, red and/or blue.

Methods or Printing

The inks and ink sets of the present invention can be utilized by printing with any inkjet printer.

The method of printing in accordance with the invention comprises the steps of:

(A) providing an ink jet printer that is responsive to digital data signals;

(B) loading the printer with a substrate to be printed;

(C) loading the printer with the above-mentioned inks or ink sets; and

(D) printing onto the substrate using the inks or inkjet ink sets in response to the digital data signals.

The inks and ink sets can be used to print many substrates including paper, especially colored papers, packaging materials, textiles and polymer substrates.

Preferably the substrate is a textile material. More preferably the textile is cotton or cotton blends. The textile material can be pretreated with, for example, an inorganic salt solution prior to digitally printing. A preferred pretreatment is an aqueous multivalent cationic salt solution disclosed in commonly owned US Provisional Appln. Serial No. 60/717,439, entitled "Fabric Pretreatment for Inkjet Printing" (Internal Reference # IJ0135 USPRV) and filed concurrently herewith, the disclosure of which is incorporated by reference herein for all purposes as if fully set forth.

A preferred pretreatment is a solution of a multivalent cation salt such as calcium chloride, calcium nitrate or calcium nitrate tetrahydrate. A 20 wt% calcium nitrate tetrahydrate solution can be effectively used. The treating conditions can utilize any means such as spraying, dipping, padding to apply the pretreatment solution.

Preferably, the pretreatment solution is applied to the fabric in a wet pick-up of from about 0.20 to about 7.5 grams of multivalent cationic (calcium) salt per 100 grams of fabric, more preferably from about 0.60 to about 6.0 grams of multivalent cationic (calcium) salt per 100 grams of fabric, and still more preferably from about 0.75 to about 5.0 grams of multivalent cationic (calcium) salt per 100 grams of fabric.

The printed textiles may optionally be post processed with heat and/or pressure, such as disclosed in US20030160851, the disclosure of which is incorporated by reference herein for all purposes as if fully set forth.

Upper temperature is dictated by the tolerance of the particular textile being printed. Lower temperature is determined by the amount of heat needed to achieve the desired level of durability. Generally, fusion temperatures will be at least about 80°C and preferably at least about 140°C, more preferably at least about 160°C and most preferably at least about 180°C.

Fusion pressures required to achieve improved durability can be very modest. Thus, pressures can be about 3 psig, preferably at least about 5 psig, more preferrable at least about 8 psig and most preferably at least about 10 psig. Fusion pressures of about 30 psi and above seem to provide no additional benefit to durability, but such pressures are not excluded.

The duration of fusion (amount of time the printed textile is under pressure at the desired temperature) is not believed to be particularly critical. Most of the time in the fusion operation generally involves bringing the print up to the desired temperature. Once the print is fully up to temperature, the time under pressure can be brief (seconds).

Criteria for a successful digitally printed textile include bright representative coloring, adequate hand feel, good durability relative to wash fastness and crock of the printed image. The inventive white ink when used by itself or within an ink set helps to provide these advantages.

The white ink can be digitally printed as a background for an image prior to putting the digitally printed image on the textile, and/or as part of the image. When printed as background, the white ink can enhance the coloring of the image: For a colored textile, digitally preprinting a white background can be particularly useful.

When printing on textiles, the white ink of this invention can provide other benefits. Often when textiles are printed the ink will feather into the textile giving an indistinct boundary. The white ink could be use to print a small, imperceptible boundary to a design and making it appear to have a distinct boundary.

EXAMPLES

Titanium Dioxide Pigments and Slurries/Dispersions

Two commercially available titanium dioxide pigments were used. One was a coated titanium dioxide pigments (R700 available from E.I. DuPont de Nemours, Wilmington DE), and one was a nano grade titanium dioxide (P-25 from Degussa, Parsippany NJ).

Titanium dioxide dispersions were prepared from titanium dioxide pigments, dispersants, water and optional additives using a Dispermat® High Speed Disperser (HSD), available from VMA-Getzmann GMBH, to premix ingredients followed by media milling using an Eiger minimill, available from Eiger Machinery, Inc. Premixing of all slurry ingredients was performed using a Model AE5 - CEX Dispermat operated typically at 2000 rpm with an attached 60 mm Cowels blade. Slurry premix was loaded into a 1-liter stainless steel vessel for media milling.

Slurry viscosity at a specific pigment loading was used to assess dispersant effectiveness. The most effective dispersant or combination of dispersants produced slurries with the lowest viscosity. Slurry viscosity was measured using a Brookfield viscometer and model RVTDV-II with measurements taken at 10 and 100 spindle rpm. Viscosity units are Centipoise (cps).

One commercially available titanium dioxide dispersion was also used (R-746, E.I. DuPont de Nemours, Wilmington DE), which is described as a 76.5 wt% (solids) titanium dioxide slurry with a hydrophilic acrylic copolymer as the dispersant. The titanium dioxide used in this slurry is described as being coated with 3% hydrous silica and 1.5 - 2.0% hydrous alumina, with a mean particle size of about 280 nm.

Ink Formulation and Evaluation

The inks were prepared by methods known to one skilled in the art, unless otherwise noted. Dispersions of the pigments (pigment slurries) were first prepared and, in a separate step, the ink components were combined and mixed together by ball milling, media milling, or other mixing means. In general 0.8 to 1.0 micron zirconia was used for the milling. After the ink was milled, it was filtered through a 1-micron filter paper to remove the media. If the ink did not filter well, it was not tested in a printer.

The examples described below were printed using an Epson 3000 ink jet printer, or a Fast T-Jet™ from US Screen Printing Institute (Tempe, AZ), and the prints were made on various substrates. The textile substrates used were Hanes Beefy T 100% cotton t-shirts, Hanes Heavy weight 100% cotton t-shirts, Hanes 50/50 polycotton cotton t-shirts, and a black fabric from Joann's Fabric (woven 100% cotton tweed). After printing, the prints were fused at about 170°C and about 60 psig for about 1 minute.

Colorimetric measurements were done using a Minolta Spectrophotometer CM-3600d using Spectra Match software.

Where indicated the printed textiles were tested for washfastness according to methods developed by the American Association of Textile Chemists and Colorists, (AATCC), Research Triangle Park, NC. The AATCC Test Method 61-1996, "Colorfastness to Laundering, Home and Commercial: Accelerated", was used. In that test, colorfastness is described as "the resistance of a material to change in any of its color characteristics, to transfer of its colorant(s) to adjacent materials or both as a result of the exposure of the material to any environment that might be encountered during the processing, testing, storage or use of the material." Tests 2A and 3A were done and the color washfastness and stain rating were recorded. The ratings for these tests are from 1-5 with 5 being the best result, that is, little or no loss of color and little or no transfer of color to another material, respectively.

Ink Example 1

Ink Example 1 had the following formulation shown in Table 1.

Table 1: Ink Example 1

| Component | Source | Wt% (based on total weight of Ink) |
|---|---|---|
| Titanium Dioxide Slurry | R-746 | 10.0 (solids) |
| Polymeric Binder | Crosslinked polyurethane PUD EX2 in US20050182154 | 8.0 (solids) |
| Surfactant | Byk-348 (BykChemie) | 0.25 |
| Solvent | Ethylene Glycol | 25.0 |
| Solvent | Glycerol | 12.0 |
| Biocide | Proxel® GXL (Avecia) | 0.2 |
| Water | | Bal. to 100% |

This ink was tested for stability by three tests: storing for one week at 70°C, storing for 72 hours at -25°C, and exposing to a temperature cycle of consists of cycling samples between 70°C and -20°C 4 times with 4 hour holds at each of the temperatures. Prior to measuring the properties of the aged inks, the inks were thawed in the case of the -25°C condition, and the test containers were mixed with low energy mixing to reslurry if necessary.

Table 2: Ink Example 1 Properties and Stability Studies

| Property | Ink as made | Ink after oven aging at 70°C | Ink after freezer aging at -25°C | Ink after T-Cycle test |
|---|---|---|---|---|
| Surface Tension | 19.38 | 26.27 | 26.19 | 26.2 |
| pH | 8.25 | 8.01 | 8.24 | 8.33 |
| Viscosity, cps at 20°C | 7.04 | 5.58 | 6.52 | 6.82 |
| Conductivity, milliS/cm | 0.217 | 0.251 | 0.225 | 0.235 |
| Mean Particle Size, nm | 336 | 267 | 294.5 | 281. |
| % below 204 nm | 12.64 | 4.94 | 17.53 | Not measured |

This ink, as formulated, was adequately stable for use in ink jet printers.

Ink Example 2

Ink Example 2 had the following formulation shown in Table 3.

Table 3: Ink Example 2, Formulations

| Component | Source | Wt% (based on total weight of Ink) |
|---|---|---|
| Titanium Dioxide Slurry | R-746 | 10 wt% (solids) |
| Polymeric Binder | Crosslinked polyurethane PUD EX2 in US20050182154 | 8.0 (solids) |
| Surfactant | Byk-348 (BykChemie) | 0.25 |
| Solvent | Ethylene Glycol | 25.0 |
| Solvent | Glycerol | 12.0 |
| Biocide | Proxel® GXL (Avecia) | 0.2 |
| Water | | Bal. to 100% |

Ink Example 2 was tested in the aging tests as for Ink Example 1. The properties and stability of Ink Example 2 were similar as Ink Example 1

Ink Examples 3-6

Ink Examples 3-6 were prepared by the following multi-step process.

A titanium dioxide slurry with polymeric dispersants as described in previously incorporated US Application Serial No. 10/872,856 (filed June 21, 2004) was used. A 1000 gram dispersion formulation was prepared by adding following ingredients, in order, into a 1 liter stainless steel pot: deionized water (185.0 g), 1,2-hexanediol (50.0 g), ethylene glycol (50.0 g), Byk 420 surfactant (Byk Chemie) (20.0 g), Dispersant 1, (SCT Comb, 6.25 g), Dispersant 3 (Phosphate Comb, 7.0 g) and Dispersant 2B (BMA/MAA GTP polymer, 6.25 g).

Each ingredient was slowly added, and mixing was done during addition using a Dispermat High Speed Disperser operated at 500 rpm with a 60 mm Cowels type blade. Once all of the ingredients had been added, mixing was continued for 15 minutes at 1500 rpm. The pH of the mixture was measured and adjusted to about 8.5 with dimethyl ethylamine.

Next, a combination of pigmentary and nano grades of titanium dioxide pigment were added in the following order: R-700 (550.0 g) then P-25 (100.0 g). Once the pigments were added, the total premix was processed for an additional 15 minutes at 2500 rpm.

The second step consisted of processing the premix in a media mill. Media milling was done using a recirculation grinding process in a model M250 Minimill (Eiger Machinery Inc.) with ceramic discs and agitator and 0.8 -1.0 mm zirconia grinding media for 15 minutes at 3000 rpm. Once milling was completed, the dispersion was filtered through a one micron filtered and transferred into a polyethylene container.

Ink Examples 3-6 were prepared using the aforementioned titanium dioxide dispersions in which titanium dioxide solids loadings were 5%, 10%, 15% and 20%. Five hundred gram samples of these inks were prepared and their compositions are shown below. The binder was the cross-linked polyurethane PUD EX2 in previously incorporated US20050182154.

Table 4 shows the ink formulations, and Table 5 shows the properties of Inks 3-6.

Table 4: Ink Examples 3-6, Formulations

| Component | Source | Parts by Weight | | | |
|---|---|---|---|---|---|
| | | Ink Ex. 3 | Ink Ex. 4 , | Ink Ex. 5 | Ink Ex. 6 |
| Titanium Dioxide Dispersion | Described above | 38.46 (5% solids) | 76.92 (10% solids) | 115.38 (15% solids) | 153.85 (20% solids) |
| Polymeric Binder | crosslinked polyurethane | 144.51 | 144.51 | 144.51 | 144.51 |
| Surfactant | Surfynol® 440 | 1 | 1 | 1 | 1 |
| Solvent | Ethylene Glycol | 25.0 | 25.0 | 25.0 | 25.0 |
| Solvent | Dowanol® TPM (Dow Chemical) | 25.0 | 25.0 | 25.0 | 25.0 |
| Solvent | 1,2-Hexanediol | 25.0 | 25.0 | 25.0 | 25.0 |
| Water | Deionized | 241.03 | 202.57 | 164.11 | 125.64 |
| Total | | 500.0 | 500.0 | 500.0 | 500.0 |

Table 5: Ink Example 3-6 Properties

| Property | Ink Ex. 3 | Ink Ex. 4 | Ink Ex. 5 | Ink Ex. 6 |
|---|---|---|---|---|
| Surface Tension | 31.21 | 31.41 | 31.60 | 30.91 |
| PH | 7.81 | 7.85 | 7.81 | 7.83 |
| Viscosity, cps at 20°C | 4.4 | 5.0 | 6.9 | 9.4 |
| Conductivity, milliS/cm | 0.48 | 0.52 | 0.57 | 0.61 |

All of the inks were stable at room temperature, but gelled when exposed to the aging tests described above. These inks were, therefore, considered functional but still required optimization of the aqueous vehicle and/or dispersant.

Inks 5 and 6 were not printed because the printer system utilized would not tolerate inks with these viscosities.

Ink Examples 7-10

Ink Examples 7-10 were prepared by the following multi-step process.

A titanium dioxide slurry with polymeric dispersants as described in previously incorporated US Application Serial No. 10/872,856 (filed June 21, 2004) was used. A 1000 gram dispersion formulation was prepared by adding following ingredients, in order, into a 1 liter stainless steel pot: deionized water (225.0 g), 1,2-hexanediol (15.0 g), Dispersant 1 (SCT Comb, 6.25 g), Dispersant 3 (Phosphate Comb, 7.0 g) and Dispersant 2B (BMA/MAA GTP polymer, 6.25 g).

Each ingredient was slowly added, and mixing was done during addition using a Dispermat High Speed Disperser operated at 500 rpm with a 60 mm Cowels type blade. Once all of the ingredients had been added, mixing was continued for 15 minutes at 1500 rpm.

Next, a combination of pigmentary and nano grades of titanium dioxide pigment were added in the following order: R-700 (550.0 g) then P-25 (100.0 g).

The second step consisted of processing the premix in a media mill. Media milling was done using a recirculation grinding process in a model M250 Minimill (Eiger Machinery Inc.) with ceramic discs and agitator and 0.8 -1.0 mm zirconia grinding media for 15 minutes at 3000 rpm. Once milling was completed, the dispersion was filtered through a one micron filtered and transferred into a polyethylene container.

Ink Examples 7-10 were prepared using the aforementioned titanium dioxide dispersions in which titanium dioxide solids loadings were 5%, 10%, 15% and 20%. 500 g samples of these inks were prepared and their compositions are shown below. The binder was the cross-linked polyurethane PUD EX2 in previously incorporated US20050182154.

Table 6 shows the ink formulations, and Table 7 shows the properties of Inks 7-10.

Table 6: Ink Examples 7-10 Formulations

| Component | Source | Parts by Weight | | | |
|---|---|---|---|---|---|
| | | Ink Ex. 7 | Ink Ex. 8 | Ink Ex. 9 | Ink Ex. 10 |
| Titanium Dioxide Dispersion | Described above | 38.46 (5% solids) | 76.92 (10% solids) | 115.38 (15% solids) | 153.85 (20% solids) |
| Polymeric Binder | crosslinked polyurethane | 144.51 | 144.51 | 144.51 | 144.51 |
| Surfactant | Surfynol® 440 | 1 | 1 | 1 | 1 |
| Solvent | Ethylene Glycol | 25.0 | 25.0 | 25.0 | 25.0 |
| Solvent | Dowanol® TPM (Dow Chemical) | 25.0 | 25.0 | 25.0 | 25.0 |
| Solvent | 1,2-Hexanediol | 25.0 | 25.0 | 25.0 | 25.0 |
| Water | Deionized | 241.03 | 202.57 | 164.11 | 125.64 |
| Total | | 500.0 | 500.0 | 500.0 | 500.0 |

Table 7: Ink Examples 7-10 Properties

| Property | Ink 7 | Ink 8 | Ink 9 | Ink 10 |
|---|---|---|---|---|
| Surface Tension | 31.81 | 31.63 | 31.24 | 30.23 |
| pH | 7.81 | 7:83 | 7.84 | 7.86 |
| Viscosity, cps at 20°C | 3.9 | 5.00 | 6.21 | 8.13 |
| Conductivity, milliS/cm | 0.49 | 0.58 | 0.64 | 0.70 |

All of the inks were stable at room temperature, but gelled when exposed to the aging tests described above. These inks were, therefore, considered functional but still required optimization of the aqueous vehicle and/or dispersant.

Inks 9 and 10 were not printed because the printer system available at the time would not tolerate inks with these viscosities.

Settling Stability of the Inventive Inks

A Comparative Ink 1 was prepared with all of the same components as Ink Example 1 except no binder was present in the comparative ink. Ink Example 1 and the Comparative Ink 1 were tested for settling by filling 2.5 X 10 cm vials with about 30 ml of the inks and comparing the settling after 24 hours at room temperature. After one day there was 2mm of soft settling in Comparative Ink 1 ink and about 1mm sediment on the bottom of the vial. The Ink Example 1 had no soft settle and very little sediment on the bottom. After 120 hours the Comparative Ink had settled 0.5 cm and the Ink Example 1 had settled 0.3.

Printing Performance

Ink Example 1 was printed using the Fast T-Jet™ from US Screen Printing Institute with a Huffy beefy T-shirt that was used as a dark black T-shirt. The white ink of Ink Example 1 was printed out of three of the seven used printing channels (replacing the light cyan, light magenta and light black), and DuPont™ Artistri™ P5000 CMYK inks were printed out of the other four channels. The image printed was a picture of racing airplanes at the Reno races. The image had an area of a bright red and white nosecone. The color at these two spots was measured. The shirts were printed with and without using Ink Example 1 as a digitally pretreated white area under the image. Also, they were printed with and without a sprayed pretreatment of a 20% calcium nitrate hydrate solution in water (calcium nitrate, 13.33 weight percent). The calcium nitrate treated area was about the same as the printed image. The estimated amount of calcium nitrate on the T-shirt prior to printing was 5 grams/yard. Table 10 shows colorimetric measurements.

Table 10: Colorimetric Measurement for Ink Example 1; Black T-shirt

| | Name | L* | a* | b* | C* | h° | OD | K/S |
|---|---|---|---|---|---|---|---|---|
| 1 | black t-shirt | 16.3627 | 0.2819 | -1.1899 | 1.2228 | 283.327 | 1.721246 | 25.3253 |
| 2 | red nose cone control, no pretreatment, no white ink background | 19.1147 | 1.4444 | 0.5092 | 1.5315 | 19.4208 | 1.609065 | 19.3375 |
| 3 | red nose cone no pretreatment, white ink background | 21.4612 | 1.9184 | 1.5157 | 2.4449 | 38.3126 | 1.543634 | 16.4968 |
| 4 | red nose cone pretreatment, no white ink background | 28.2834 | 7.7313 | 7.3719 | 10.6826 | 43.6368 | 1.411168 | 11.906 |
| 5 | red nose cone pretreatment and white ink background | 40.043 | 24.4182 | 18.2712 | 30.4973 | 36.8061 | 1.304518 | 9.1054 |
| 6 | white nose cone no pretreatment, no white background | 23.9974 | -0.924 | -3.9734 | 4.0794 | 256.908 | 1.458421 | 13.3852 |
| 7 | white nose cone no pretreatment with white ink background | 28.0427 | -1.3172 | -4.7087 | 4.8894 | 254.372 | 1.341035 | 9.9877 |
| 8 | white nose cone pretreatment no white ink background | 70.3828 | -3.1101 | -1.3964 | 3.4092 | 204.179 | 0.613144 | 1.1736 |
| 9 | white nose cone pretreatment, with white ink background | 77.6686 | -2.4575 | -2.3914 | 3.429 | 224.219 | 0.538501 | 0.8724 |

Entry 1 is the colorimetric measurement of the unprinted T-shirt. Entry 2 and 6 are controls of printing the image without using the inventive white ink. Entries 3, 5, 7 and 9 are inventive, and Entries 5 and 9 are inventive with the added optional pretreatment of the T-shirt. Entries 4 and 8 are comparative and show the effect of pretreatment on the use of the DuPont® Artistri® P5000 CMYK inks. Significantly enhanced colors are observed when the inventive inks are used.

The t-shirt of entry 9 was subject to several cycles of laundering and it was observed that the image did not fade with the washings.

A similar test was done using a white T-shirt shown in Table 11. The T-shirt was pretreated by spraying a 20 wt% calcium nitrate solution on it and printed using the Fast T-Jet™ from US Screen Printing Institute.

Table 11: Colorimetric Measurement for Ink Example 1; White T-shirt

| Name | L* | a* | b* | C* | h° | OD | K/S |
|---|---|---|---|---|---|---|---|
| White T-shirt | 95.18 | 3.36 | -13.87 | 14.28 | 283.62 | 0.68 | 1.50 |
| red nose cone | 53.18 | 29.26 | 23.47 | 37.51 | 38.73 | 1.13 | 5.72 |
| white nose cone | 78.79 | -1.58 | -1.17 | 1.97 | 216.42 | 0.70 | 1.62 |

Another test was done using the Epson 3000 printer and Black 100 % woven cotton tweed. The cotton was pretreated with a 20 wt% calcium nitrate solution. Ink Example 1 was printed using 4 passes and the DuPont® Artistri®P5000 CK inks in one pass. Blocks of colors were printed and the color properties measured and the results are shown in Table 12.

Table 12: Colorimetric Measurements for Ink Example 1; Black Cotton

|  | L* | a | b | C | H° | OD | 3A Wash A05 |
|---|---|---|---|---|---|---|---|
| Kink | 28.8139 | -0.1573 | 0.1563 | 0.2218 | 135.1751 | 1.29 | 3.5 |
| C ink | 49.5002 | -15.7895 | -24.9692 | 29.5427 | 237.6924 | 1.08 | 4 |

For comparison, K ink was printed on a 419 cotton and the OD was 1.17 and the wash fastness was 3. For comparison, C ink was printed on a 419 white cotton and the OD was 1.13 and the wash fastness was 3. The combination of the pretreatment, the white ink and the pigmented DuPont™ Artistri™ P5000 CK results in superior color and wash fastness.

Ink Example 2 was printed on a black 100 % woven cotton tweed using an Epson 3000 printer. In order to maximize the effect of the inventive white ink, the t-shirt was printed one or more times with the white ink prior to printing the colored image. The printed white was measured for whiteness. Each of the printed samples was pretreated with a 20 wt% calcium nitrate solution. "One pass" denotes that the white area was only printed once, and "four pass" denotes that the white area was printed with the ink of Ink Example 2.

The printed t-shirt was washed according AATC wash test. Wash one and wash two indicate two different wash tests on different samples.

Table 13: Print Performance Ink Examples 2a-2d

| Test | L* | a* | b* | C* | h° | 3A A05 |
|---|---|---|---|---|---|---|
| Blk std | 16.8568 | -0.1214 | -1.7169 | 1.7212 | 265.9552 |  |
| Ink 2 one pass | 42.3088 | -1.8598 | -6.1457 | 6.4209 | 253.1635 |  |
| Wash test one | 38.0245 | -1.5562 | -5.294 | 5.518 | 253.6196 | 2.64 |
| Wash test two | 37.9496 | -1.5126 | -5.3955 | 5.6035 | 254.3397 | 2.62 |
| Ink 2 four pass | 66.5394 | -2.4094 | -5.5442 | 6.0451 | 246.5114 |  |
| Wash test one | 65.1322 | -2.3627 | -5.3579 | 5.8557 | 246.2039 | 4.17 |
| wash test two | 64.6181 | -2.3235 | -5.4739 | 5.9466 | 247.0003 | 3.97 |

The ink of Ink Example 2 with the different blends of the pigmentary and nano titanium dioxide gave similar color and washfastness results.

## Claims

1. An aqueous inkjet ink comprising an aqueous vehicle having dispersed therein:

    (a) a titanium dioxide pigment dispersed with a polymeric dispersant, and
    (b) a crosslinked polyurethane binder additive.

2. The aqueous inkjet ink of claim 1, comprising an aqueous vehicle to which has been added a titanium dioxide slurry and the crosslinked polyurethane binder additive, wherein the titanium dioxide slurry comprises the titanium dioxide pigment and the polymeric dispersant.

3. The aqueous inkjet ink of any one or combination of the preceding claims, wherein the titanium dioxide pigment comprises a combination of a pigmentary grade and nano grade of titanium dioxide pigment.

4. The aqueous inkjet ink of any one or combination of the preceding claims, wherein the polymeric dispersant comprises a structured polymer dispersant.

**5.** The aqueous inkjet ink of any one or combination of the preceding claims, wherein the polymeric dispersant comprises at least one polymer that provides anionic stabilization to the titanium dioxide pigment.

**6.** The aqueous inkjet ink of any one or combination of the preceding claims, wherein the crosslinked polyurethane of the binder additive is a dispersed polymer.

**7.** The aqueous inkjet ink of any one or combination of the preceding claims, wherein the crosslinked polyurethane is stabilized in dispersion through incorporated anionic functionality.

**8.** The aqueous inkjet ink of any one or combination of the preceding claims, comprising from about 70 wt% to about 97.5 wt% of the aqueous vehicle, and/or from about 1 wt% to about 25 wt% (solids) of the titanium dioxide pigment, and/or from about 1 wt% to about 15 wt% of the crosslinked polyurethane binder, based on the total weight of the ink.

**9.** The aqueous inkjet ink composition of any one or combination of the preceding claims, having a surface tension in the range of from about 20 dyne/cm to about 70 dyne/cm at 25°C, and a viscosity is in the range of from about 1 cP to about 30 cP at 25°C.

**10.** The aqueous inkjet ink of any or combination of the preceding claims, which is white in color.

**11.** An ink set comprising at least two differently colored inks, wherein at least one of the inks is the aqueous inkjet ink of claim 10.

**12.** The ink set of claim 11, comprising a cyan ink, a magenta ink and a yellow ink.

**13.** The ink set of claim 10 or claim 11, comprising a black ink.

**14.** The ink set of any of claim 10-13, wherein the non-white inks of the ink set comprise a pigment colorant dispersed in a vehicle.

**15.** The ink set of claim 14, wherein the non-white inks of the ink set comprise a pigment colorant dispersed in an aqueous vehicle.

**16.** A method for inkjet printing onto a substrate, comprising the steps of

(a) providing an inkjet printer that is responsive to digital data signals;
(b) loading the printer with a substrate to be printed;
(c) loading the printer with an ink as set forth in any of claims 1-10, or an inkjet ink set as set forth in any of claims 11-15; and
(d) printing onto the substrate using the ink or inkjet ink set in response to the digital data signals.

**17.** The method of claim 16, wherein the substrate is a textile.

**18.** The method of claim 17, wherein the substrate is a cotton or cotton blend pretreated with an inorganic salt solution.

**19.** The method of claim 16, wherein the printed substrate is post treated with a combination of heat and pressure.

**20.** The method of any one or combination of claims 16-19, wherein the printer is loaded with a white ink as set forth in claim 10.

**21.** The method of claim 20, wherein the white ink is printed onto a colored textile substrate as a background for an image.


**Patentansprüche**

**1.** Wässrige Tintenstrahltinte umfassend ein wässriges Vehikel, in dem Folgende dispergiert sind:

(a) ein Titandioxidpigment, das mit einem polymeren Dipergiermittel dispergiert ist, und
(b) ein vernetztes Polyurethan-Bindemittel-Zusatzmittel.

**2.** Wässrige Tintenstrahltinte nach Anspruch 1, umfassend ein wässriges Vehikel, dem eine Titandioxidaufschlämmung und das vernetzte Polyurethan-Bindemittel-Zusatzmittel hinzugesetzt worden sind, wobei die Titandioxidaufschlämmung das Titandioxidpigment und das polymere Dispergiermittel umfasst.

**3.** Wässrige Tintenstrahltinte nach einem oder einer Kombination der vorhergehenden Ansprüche, wobei das Titandioxidpigment eine Kombination eines Titandioxidpigments von Pigmentqualität und Nanoqualität umfasst.

**4.** Wässrige Tintenstrahltinte nach einem oder einer Kombination der vorhergehenden Ansprüche, wobei das polymere Dispergiermittel ein strukturiertes polymeres Dispergiermittel umfasst.

**5.** Wässrige Tintenstrahltinte nach einem oder einer Kombination der vorhergehenden Ansprüche, wobei das polymere Dispergiermittel mindestens ein Polymer umfasst, das dem Titandioxidpigment anionische Stabilisierung verleiht.

**6.** Wässrige Tintenstrahltinte nach einem oder einer Kombination der vorhergehenden Ansprüche, wobei das vernetzte Polyurethan des Bindemittel-Zusatzmittels ein dispergiertes Polymer ist.

**7.** Wässrige Tintenstrahltinte nach einem oder einer Kombination der vorhergehenden Ansprüche, wobei das vernetzte Polyurethan durch eingearbeitete anionische Funktionalität in der Dispersion stabilisiert ist.

**8.** Wässrige Tintenstrahltinte nach einem oder einer Kombination der vorhergehenden Ansprüche, umfassend etwa 70 Gew.% bis etwa 97,5 Gew.% des wässrigen Vehikels und/oder etwa 1 Gew.-% bis etwa 25 Gew.% (Feststoffe) des Titandioxidpigments und/oder etwa 1 Gew.% bis etwa 15 Gew.% des vernetzte Polyurethanbindemittels, auf das Gesamtgewicht der Tinte bezogen.

**9.** Wässrige Tintenstrahltintenzusammensetzung nach einem oder einer Kombination der vorhergehenden Ansprüche, die eine Oberflächenspannung im Bereich von etwa 20 dyn/cm bis etwa 70 dyn/cm bei 25 °C und eine Viskosität im Bereich von etwa 1 cP bis etwa 30 cP bei 25 °C aufweist.

**10.** Wässrige Tintenstrahltinte nach einem oder einer Kombination der vorhergehenden Ansprüche, die eine weiße Farbe besitzt.

**11.** Tintensatz umfassend mindestens zwei verschiedenfarbige Tinten, wobei mindestens eine der Tinten wässrige Tintenstrahltinte nach Anspruch 10 ist.

**12.** Tintensatz nach Anspruch 11, umfassend eine cyanfarbene Tinte, eine magentarote Tinte und eine gelbe Tinte.

**13.** Tintensatz nach Anspruch 10 oder Anspruch 11, umfassend eine schwarze Tinte.

**14.** Tintensatz nach einem der Ansprüche 10 - 13, wobei die nichtweißen Tinten des Tintensatzes ein pigmentiertes Farbmittel umfassen, das in einem Vehikel dispergiert ist.

**15.** Tintensatz nach Anspruch 14, wobei die nichtweißen Tinten des Tintensatzes ein pigmentiertes Farbmittel umfassen, das in einem wässrigen Vehikel dispergiert ist.

**16.** Methode zum Tintenstrahldrucken auf ein Substrat, umfassend die Schritte des:

(a) Bereitstellens eines Tintenstrahldruckers, der auf digitale Datensignale anspricht;
(b) Beladens des Druckers mit einem zu bedruckenden Substrat;
(c) Beladens des Druckers mit einer Tinte, wie in einem der Ansprüche 1 - 10 aufgeführt, oder einem Tintenstrahltintensatz, wie in einem der Ansprüche 11-15 aufgeführt; und
(d) Druckens auf das Substrat unter Anwendung der Tinte oder des Tintensatzes als Reaktion auf die digitalen Datensignale hin.

**17.** Methode nach Anspruch 16, wobei das Substrat ein Teatilstoff ist.

**18.** Methode nach Anspruch 17, wobei das Substrat Baumwolle oder Baumwollnischung ist, die mit einer anorganischen Salzlösung vorbehandelt worden ist.

**19.** Methode nach Anspruch 16, wobei das bedruckte Substrat mit einer Kombination von Hitze und Druck nachbehandelt wird.

**20.** Methode nach einem oder einer Kombination der Ansprüche 16 - 19, wobei der Drucker mit einer weißen Tinte, wie in Anspruch 10 aufgeführt, beladen wird.

**21.** Methode nach Anspruch 20, wobei die weiße Tinte auf ein farbiges Textilstoffsubstrat als Hintergrund für ein Bild gedruckt wird.

**Revendications**

**1.** Encre aqueuse pour jet d'encre comprenant un véhicule aqueux ayant dispersé à l'intérieur:

(a) un pigment de dioxyde de titane dispersé avec un dispersant polymère, et
(b) un additif du type liant de polyuréthane réticulé.

**2.** Encre aqueuse pour jet d'encre selon la revendication 1, comprenant un véhicule aqueux auquel a été ajoutée une suspension de dioxyde de titane et l'additif du type liant de polyuréthane réticulé, dans laquelle la suspension de dioxyde de titane comprend le pigment de dioxyde de titane et le dispersant polymère.

**3.** Encre aqueuse pour jet d'encre selon l'une quelconque ou une combinaison des revendications précédentes, dans laquelle le pigment de dioxyde de titane comprend une combinaison de qualité pigmentaire et de qualité nano de pigment de dioxyde de titane.

**4.** Encre aqueuse pour jet d'encre selon l'une quelconque ou une combinaison des revendications précédentes, dans laquelle le dispersant polymère comprend un dispersant polymère structuré.

**5.** Encre aqueuse pour jet d'encre selon l'une quelconque ou une combinaison des revendications précédentes, dans laquelle le dispersant polymère comprend au moins un polymère qui fournit la stabilisation anionique au pigment de dioxyde de titane.

**6.** Encre aqueuse pour jet d'encre selon l'une quelconque ou une combinaison des revendications précédentes, dans laquelle le polyuréthane réticulé de l'additif du type liant est un polymère dispersé.

**7.** Encre aqueuse pour jet d'encre selon l'une quelconque ou une combinaison des revendications précédentes, dans laquelle le polyuréthane réticulé est stabilisé en dispersion à travers une fonctionnalité anionique incorporée.

**8.** Encre aqueuse pour jet d'encre selon l'une quelconque ou une combinaison des revendications précédentes, comprenant d'environ 70 % en pds jusqu'à environ 97,5 % en pds du véhicule aqueux, et/ou d'environ 1 % en pds jusqu'à environ 25 % en pds (matières solides) du pigment de dioxyde de titane, et/ou d'environ 1 % en pds jusqu'à environ 15 % en pds du liant de polyuréthane réticulé, basé sur le poids total de l'encre.

**9.** Composition d'encre aqueuse pour jet d'encre selon l'une quelconque ou une combinaison des revendications précédentes, ayant une tension superficielle dans la plage d'environ 20 dynes/cm jusqu'à environ 70 dynes/cm à 25°C, et une viscosité située dans la plage d'environ 1 cP jusqu'à environ 30 cP à 25°C.

**10.** Encre aqueuse pour jet d'encre selon l'une quelconque ou une combinaison des revendications précédentes, qui est de couleur blanche.

**11.** Jeu d'encres comprenant au moins deux encres différemment colorées, dans lequel au moins l'une des encres est l'encre aqueuse pour jet d'encre selon la revendication 10.

**12.** Jeu d'encres selon la revendication 11, comprenant une encre cyan, une encre magenta et une encre jaune.

**13.** Jeu d'encres selon la revendication 10 ou la revendication 11, comprenant une encre noire.

**14.** Jeu d'encres selon l'une quelconque des revendications 10 à 13, dans lequel les encres non blanches du jeu d'encres comprennent un colorant pigmenté dispersé dans un véhicule.

15. Jeu d'encres selon la revendication 14, dans lequel les encres non blanches du jeu d'encres comprennent un colorant pigmenté dispersé dans un véhicule aqueux.

16. Procédé pour l'impression par jet d'encre sur un substrat, comprenant les étapes de:

(a) fourniture d'une imprimante par jet d'encre qui est sensible à des signaux de données numériques;
(b) charge de l'imprimante à l'aide d'un substrat à imprimer;
(c) charge de l'imprimante à l'aide d'une encre telle qu'exposée selon l'une quelconque des revendications 1 à 10, ou d'un jeu d'encres pour jet d'encre tel qu'exposé selon l'une quelconque des revendications 11 à 15; et
(d) impression sur le substrat utilisant l'encre ou le jeu d'encres pour jet d'encre en réponse aux signaux de données numériques.

17. Procédé selon la revendication 16, dans lequel le substrat est un textile.

18. Procédé selon la revendication 17, dans lequel le substrat est du coton ou un mélange de cotons prétraité avec une solution de sel inorganique.

19. Procédé selon la revendication 16, dans lequel le substrat imprimé est post-traité avec une association de chaleur et de pression.

20. Procédé selon l'une quelconque ou une combinaison des revendications 16 à 19, dans lequel l'imprimante est chargée avec une encre blanche telle qu'exposée selon la revendication 10.

21. Procédé selon la revendication 20, dans lequel l'encre blanche est imprimée sur un substrat textile coloré servant d'arrière-fond à une image.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5085698 A
- EP 0556649 A
- US 5231131 A
- US 6117921 A
- US 6262152 B
- US 6306994 B
- US 6433117 B
- US 87285604 A
- US 20050182154 A
- US 5026427 A
- US 5086698 A
- US 5141556 A
- US 5169436 A
- US 6160370 A
- US 5571311 A
- US 5609671 A
- US 5968243 A
- US 5928419 A
- US 6323257 B
- US 5554739 A
- US 5672198 A
- US 5698016 A
- US 5718746 A
- US 5749950 A
- US 5803959 A
- US 5837045 A
- US 5846307 A
- US 5895522 A
- US 5922118 A
- US 6123759 A
- US 6221142 B
- US 6221143 B
- US 6281267 B
- US 6329446 B
- US 6332919 B
- US 6375317 B
- US 6287374 B
- US 6398858 B
- US 6402825 B
- US 6468342 B
- US 6503311 B
- US 6506245 B
- US 6852156 B
- US 717439 P
- US 20030160851 A

**Non-patent literature cited in the description**

- The Pigment Handbook. John Wiley & Sons, 1988, vol. 1